# EUROPÄISCHE PATENTSCHRIFT

(11) **EP 1 033 554 B1**
(45) Veröffentlichungstag und Bekanntmachung des Hinweises auf die Patenterteilung: **31.10.2001**
(21) Anmeldenummer: 00103682.1
(22) Anmeldetag: 22.02.2000
(51) Int. Cl.: G01B 17/02, B29C 47/92

(54) **Dickenmessungen an Hohlkammerplatte mit Tropfenankopplung**
Thickness measurements on hollow chamber plate with droplet coupling
Mesures d'épaisseur dans un panneau à chambres creuses avec couplage à goutte

(30) Priorität: 02.03.1999 DE 19909095
(43) Veröffentlichungstag der Anmeldung: 06.09.2000
(73) Patentinhaber: GROSS, Heinz, Dr.-Ing., D-64380 Rossdorf (DE)
(72) Erfinder: GROSS, Heinz, Dr.-Ing., D-64380 Rossdorf (DE)
(74) Vertreter: Katscher, Helmut, Dipl.-Ing.

(56) Entgegenhaltungen:
- DE-U- 9 206 011
- DE-U- 9 211 092
- GB-A- 1 438 935
- US-A- 5 585 563

## Beschreibung

Die Messung von Wand- und Gesamtdicken von Teilen mittels Ultraschall gehört seit langem zum Stand der Technik. In GB 2 184 840 ist zum Beispiel die Messung der Dicke eines Teiles mittels Ultraschall beschrieben. Das Ankoppeln der Schallwellen in einer stationären Meßapparatur mittels Wasser ist in DE 34 15 618 A1 beschrieben. Der Rohrdurchmesser eines sich in der Produktionsanlage kontinuierlich vorschiebenden Rohres mit zwei feststehenden Ultraschallsensoren, die im Winkel von 180° angeordnet sind, ist aus US 5 596 508 bekannt. In diesem Fall wird die Ankopplung der Schallwellen an die Rohroberflächen mittels eines Wasserbades, in dem sich auch die Sensoren befinden, realisiert.

Die Erfindung betrifft ein Verfahren zur Messung der Gesamtdicke von Hohlkammerplatten vorzugsweise aus thermoplastischen Kunststoffen sowie der Dicke der oberen und der unteren Außenwand der Hohlkammerplatten während des Herstellprozesses, sowie ein Verfahren zur Herstellung solcher Hohlkammerplatten, wobei die Dicken der Außenwände während des Herstellprozesses durch Verstellung der lokalen Fließkanalgeometrie im Werkzeug unter Verwendung des erfindungsgemäßen Meßverfahrens auf vorgegebene Dickensollwerte geregelt werden.

Vorrichtungen zur gleitenden Dickenmessung einzelner Wände von flächigen Werkstoffen mittels Ultraschall sind aus DE 9206011 U1 und DE 9211092 U1 prinzipiell bekannt. Das zentrale Problem der Ankopplung der vom Ultraschallsensor ausgesendeten Schallwellen an die zu messende Oberfläche wird dabei so gelöst, daß der Prüfkopf zur Aufnahme der Koppelflüssigkeit von einem Gehäuse umgeben ist, das in Richtung der Oberfläche der zu messenden Wand offen ist und entweder dichtend an diese anlegbar ist oder aber in einem durch die Oberflächenspannung der Koppelflüssigkeit überbrückbaren Abstand von der Oberfläche führbar ist. Verfahren zur Messung der Gesamtdicke von Hohlkammerplatten sind bisher unbekannt.

Die Verwendung der bekannten Vorrichtungen in einem Verfahren zur Messung der Dicke von Außenwänden bringt einige Probleme mit sich. Beim Anfahren der Anlage ist das Gehäuse noch nach unten offen, das heißt, es kann sich noch keine Koppelflüssigkeit in dem Gehäuse befinden, da beim Anfahren noch keine Platte zum Abdichten des Gehauses existiert. Wenn dann nach dem Anfahren der Anlage an der Meßposition eine Plattenoberfläche vorhanden ist, muß vor Beginn der Messung das Gehäuse mit Koppelflüssigkeit geflutet werden. Dabei tritt in aller Regel erst einmal eine gewisse Menge Koppelflüssigkeit aus, bevor das Gehäuse luftblasenfrei gefüllt ist. Die ausgetretene Koppelflüssigkeit verbleibt auf der Oberfläche der Hohlkammerplatte und führt an dieser Stelle zu einer Störung der Abkühlverhältnisse und somit zu erhöhten Eigenspannungen in der Platte.

Auch während der Messung selbst besteht speziell bei der Verwendung der Vorrichtung an Hohlkammerplatten aus thermoplastischen Kunststoffen die Gefahr, daß die Koppelflüssigkeit aus dem Gehäuse herauslauft, da die Oberflächen von Hohlkammerplatten nicht eben sind sondern im Bereich der Einbindung der Stege in die Außenwand Einfallstellen besitzen. Diese Einfallstellen erschweren die direkte Abdichtung des Gehäuses durch die Plattenoberfläche beziehungsweise erhöhen bereichsweise den Abstand des Gehäuses zur Plattenoberfläche, wodurch auch die Überbrückung des vergrößerten Spalts mittels der Oberflächenspannung entsprechend DE 92 11 092.4 U1 gefährdet ist. Wird der Abstand nur an einer Steile über den Umfang des Gehäuses zu groß, so läuft das gesamte Gehäuse leer, was wiederum eine Wasserlache auf der Platteneberfläche zur Folge hat. Diese Gefahr besteht natürlich auch, wenn der Sensor über Fehlstellen in der Plattenoberfläche hinwegläuft. In diesen Fällen wird die Messung unterbrochen und man muß erst einmal wieder das Gehäuse mit Koppelflüssigkeit füllen, damit man mit der Messung fortfahren kann. Zusätzlich entstehen natürlich bei der Fertigung und beim Einbau der Gehäuse auch Kosten, die es einzusparen gilt.

Verfahrenstechnisch betrachtet entsteht während der Messung im Bereich der Öffnung des Gehäuses, das heißt in dem Bereich, in dem die Oberfläche der Hohlkammerplatte von der Koppelflüssigkeit benetzt wird, eine lokal begrenzte Unstetigkeit im Abkühlverlauf der Platte, was zu erhöhten und damit natürlich unerwünschten Eigenspannungen im Bereich um die benetzte Fläche herum führt. Dies ist bei Hohlkammerplatten aus thermoplastischen Kunststoffen deshalb besonders kritisch, da man, aus Gründen einer möglichst frühzeitigen Information, die Messung so nah wie möglich hinter der Kalibrierung ausführen sollte, und da die Hohlkammerplatte aus Gründen einer hohen Produktionsgeschwindigkeit an dieser Stelle, je nach verarbeitetem Kunststoff, noch Temperaturen von oberhalb 100 °C besitzen kann.

Der Erfindung liegt daher die Aufgabe zu Grunde, ein Verfahren zur Messung der Gesamtdicke von Hohlkammerplatten zu realisieren, sowie ein Verfahren zur Messung der Dicke der oberen und der unteren Außenwand von Hohlkammerplatten während des Herstellprozesses zu realisieren, das einerseits die Probleme bei Verwendung der bekannten Vorrichtungen vermeidet und andererseits eine größere Betriebssicherheit aufweist, so daß man auch störungsfrei arbeitende Regelverfahren ausführen kann. Zusätzlich sollte die zur Durchführung des Verfahrens erforderliche Vorrichtung kostengünstiger zu fertigen sein. Bei dem Verfahren zur Herstellung von Hohlkammerplatten unter Regelung der Wanddicken können entweder die Gesamtdicke oder die beiden Außenwanddicken oder alles gemeinsam unter Einsatz des Wanddickenmeßverfahrens in Kombination mit einem zusätzlichen Regler und unter Einsatz von automatisch verstellbaren Werkzeugen geregelt werden.

Die Gesamtdicke von Hohlkammerplatten wird erfindungsgemäß gemessen, indem sich die zur Messung eingesetzten Ultraschallsensoren so nah an der jeweiligen Hohlkammerplattenoberfläche befinden, daß zum Einkoppeln der Schallwellen in die jeweilige Außenwand jeweils ein Tropfen einer Koppelflüssigkeit ausreicht, der den Zwischenraum zwischen dem Schallaustrittsbereich der Sensoren und der Bahnoberfläche der Hohlkammerplatte benetzt, so daß die Gesamtdicke D der Hohlkammerplatte ermittelt wird, indem mittels Reflexion der von den Ultraschallsensoren ausgesendeten Schallwellen an der oberen bzw. unteren Hohlkammerplattenoberfläche die Entfernung der beiden Ultraschallsensoren zu der jeweiligen Hohlkammerplattenoberfläche bestimmt und daraus in einer Auswerteeinheit bei Kenntnis des Abstands der Sensoren untereinander die Gesamtdicke D der Hohlkammerplatte berechnet wird.

Die Außenwanddicken do und du einer Hohlkammerplatte werden erfindungsgemäß gemessen, indem sich die zur Messung eingesetzten Ultraschallsensoren so nah an der jeweiligen Hohlkammerplattenoberfläche befinden, daß zum Einkoppeln der Schallwellen in die jeweilige Außenwand jeweils ein Tropfen einer Koppelflüssigkeit ausreicht, der den Zwischenraum zwischen dem Schallaustrittsbereich der Sensoren und der Bahnoberfläche der Hohlkammerplatte benetzt, wobei die Außenwanddicken do und du der Hohlkammerplatte mittels des Laufzeitunterschieds zwischen den Echos der ausgesendeten Schallwellen an der Ober- bzw. an der Unterseite der Außenwände der Hohlkammerplatte gemessen werden.

Die Ankopplung der Sensoren erfolgt dabei über die lediglich im Bereich des Meßkopfes lokal begrenzt zugeführte Koppelflüssigkeit, die dafür sorgt, daß die Schallaustrittsfläche des Sensors und die Oberfläche der direkt darunter bzw. darüber befindlichen Hohlkammerplatte ständig mit einem kleinen Tropfen Koppelflüssigkeit benetzt sind. Damit kann auf ein Gehäuse zur Aufnahme der Koppelflüssigkeit verzichtet werden. Auf Grund der geringen Masse und dem damit verbundenen geringen Wärmeinhalt, sowie der geringen Ausdehnung dieses Koppelflüssigkeitstropfens ergibt sich eine unbedeutende Veränderung der Abkühlverhältnisse der Platte im Bereich der Messung, da der Tropfen sich sehr schnell auf eine Temperatur erwärmt, die nahe an der der jeweiligen Außenwand liegt.

Zur Aufrechterhaltung der Ankopplung wird wahrend der Messung immer nur soviel Koppelflüssigkeit nachdosiert, wie erforderlich ist, um den Tropfen nicht abreißen zu lassen. Dazu wird direkt vor dem Sensor mittels einer kleinen Düse kontinuierlich ein extrem kleiner Koppelflüssigkeitsstrom in den engen Spalt zwischen dem Sensorkopf und der Hohlkammerplattenoberfläche zugeführt. Es wird genau soviel Koppelflüssigkeit zugeführt, wie Koppelflüssigkeit bei der Messung verdunstet oder auf der Plattenoberfläche verbleibt. Das Verfahren ist besonders geeignet, um Hohlkammerplatten aus thermoplastischen Kunststoffen zu messen. Es kann natürlich auch zur Messung von Hohlkammerplatten aus anderen Materialien, wie zum Beispiel aus Aluminium oder aus Glas eingesetzt werden.

Bei der Durchführung des Verfahrens ist es nach Anspruch 3 vorteilhaft, die Messung direkt hinter dem Kalibratorauslauf vorzunehmen, da einerseits dort die Lage der Hohlkammerplatte genau festgelegt ist und da sich andererseits dieser Ort relativ nah am Werkzeugaustritt befindet. Dies hat den Vorteil, daß die Totzeit für eine Regelung klein ist. Der Sensorkopf sollte einen Durchmesser von kleiner 20 mm besitzen, vorzugsweise einen solchen von kleiner 10 mm, um die von der Koppelflüssigkeit zu benetzende Fläche auf der Hohlkammerplattenoberfläche möglichst klein zu halten. Der Spalt zwischen dem Sensorkopf und der jeweiligen Oberfläche der Hohlkammerplatte sollte 5 mm bis 0,1 mm groß sein, vorzugsweise jedoch kleiner 2 mm sein, um eine ideale Benetzung zu gewährleisten. Zur Messung können mehrere Sensoren über der Breite der Hohlkammerplatte verteilt werden. Nach Anspruch 4 ist es aber vorteilhaft, jeweils einen Sensor auf jeweils eine Traverse, die sich oberhalb und unterhalb der Hohlkammerplatte befindet, zu montieren und die Sensoren über die Plattenbreite traversieren zu lassen. Beim Traversieren messen die einzelnen Sensoren zeitlich versetzt Dickenwerte über der Breite der Hohlkammerplatte. Als Koppelflüssigkeit eignet sich nach Anspruch 5 insbesondere Wasser, das kostengünstig ist und nur geringe Störungen auf der Plattenoberfläche erzeugt.

Es können aber auch andere Koppelmedien benutzt werden. Um eine unerwünschte lokale Abkühlung der Oberfläche der Hohlkammerplatte zu vermeiden, kann es nach Anspruch 6 vorteilhaft sein, das Koppelmedium vorzuwärmen. Will man verhindern, daß Reste der Koppelflüssigkeit auf der Oberfläche der Hohlkammerplatte verbleiben, so ist es nach Anspruch 7 vorteilhaft, hinter den Sensoren die Koppelflüssigkeit durch Abrakeln, Absaugen oder Abstreifen wieder zu entfernen. Das Verfahren läßt sich nach Anspruch 8 besonders vorteilhaft bei der Herstellung von Hohlkammerplatten aus thermoplastischem Kunststoff anwenden. Es ist aber prinzipiell auch bei Hohlkammerplatten aus anderen Werkstoffen einsetzbar.

Besonders vorteilhaft und wirtschaftlich ist es, wenn man, wie in Anspruch 9 beschrieben, das erfindungsgemäße Meßverfahren einsetzt, um Istwerte der Dicke der Hohlkammerplatten zu gewinnen, und wenn man diese Istwerte in einem speziellen Regler mit vorgegebenen Sollwerten vergleicht und dabei einen Stellweg berechnet und diesen an automatisch ansteuerbare Stellelemente weitergibt, um so die Werkzeug- oder die Kalibratorgeometrie automatisch nachzuregeln.

Weitere Details des erfindungsgemäßen Verfahrens ergeben sich aus den nachfolgenden Beschreibungen der Verfahrensanordnung anhand der Zeichnungen. Es zeigt:
Fig. 1 ein Beispiel einer Verfahrensanordnung nach der Erfindung in einer Seitenansicht und
Fig. 2 einen beispielhaften Querschnittsausschnitt der Verfahrensanordnung im Bereich der Ultraschallsensoren

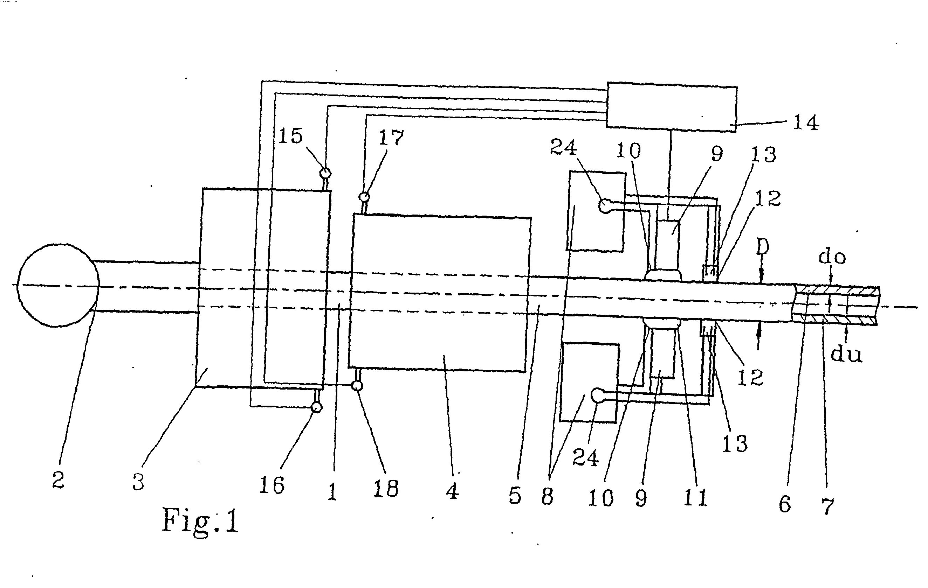

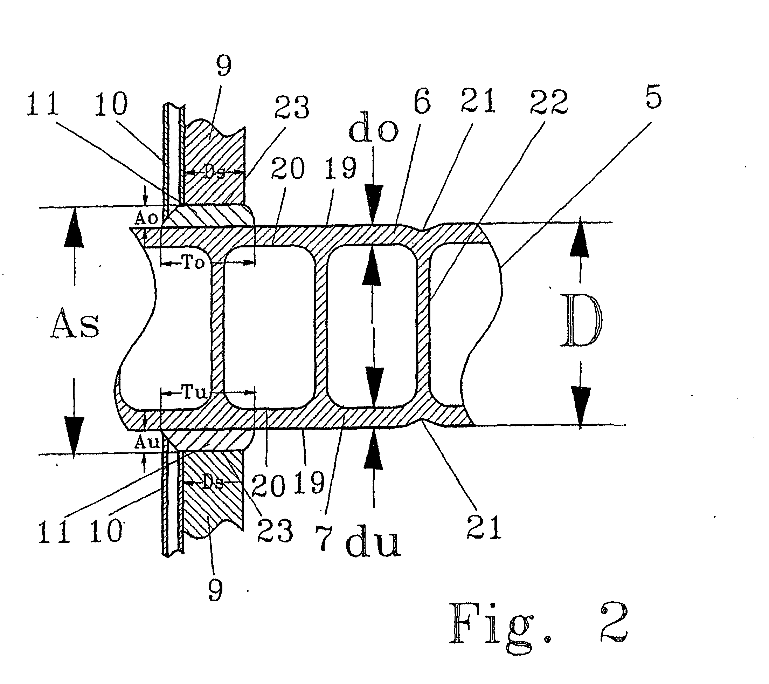

Bei der Ausführung des Verfahrens wird, wie in Figur 1 beispielhaft gezeigt, thermoplastische Schmelze 1 mittels eines Förderaggregates 2 durch ein Werkzeug 3 hindurchgepreßt. Hinter dem Werkzeug 3 ist ein gekühlter Kalibrator 4 angeordnet, der die Schmelze 1, die im Werkzeug 3 ungefähr auf die angestrebte Endgeometrie umgeformt worden ist, abkühlt und kalibriert. Am Ende des Kalibrators 4 tritt somit die erstarrte aber in der Regel noch sehr warme Hohlkammerplatte 5 aus. Die Hohlkammerplatte 5, ein Geometriebeispiel in vergrößerter Schnittdarstellung zeigt Figur 2, besteht aus einer oberen Außenwand 6 mit einer Dicke do und aus einer unteren Außenwand 7 mit einer Dicke du sowie einer Gesamtdikke D. Die Innengeometrie einer solchen Hohlkammerplatte 5 kann sehr unterschiedlich seln. Im Rahmen dieser Anmeldung sei unter einer Hohlkammerplatte 5 ein Produkt zu verstehen, das Hohlräume und das wenigstens bereichsweise eine ebene Oberfläche besitzt. In Fig. 2 ist beispielhaft ein Schnitt durch einen Ausschnitt einer möglichen Hohlkammerplattengeometrie dargestellt. Bei Hohlkammerplatten 5 aus thermoplastischen Materialien besitzen die Außenwände 6 und 7 fertigungsbedingt Einfallstellen 21 wie in Fig. 2 oberhalb der Stege 22 gezeigt.

Bei dem erfindungsgemäßen Verfahren sind direkt hinter dem Kalibrator 4, beispielsweise oberhalb und unterhalb der Hohlkammerplatte 5 jeweils eine Traverse 8 angeordnet. Auf jeder Traverse 8 ist wiederum jeweils ein Ultraschallsensor 9 montiert. Die Ultraschallsensoren 9 sind vorzugsweise rund und haben einen Durchmesser Ds von kleiner 20 mm, vorteilhafterweise sogar einen von kleiner 10 mm. Sie haben, wie in Fig. 2 gezeigt, untereinander einen festen Abstand As und gegenüber der Oberfläche der Hohlkammerplatte 5 einen Abstand Ao bzw. Au. Die Abstände Ao bzw. Au sollten jeweils kleiner 5 mm sein, vorzugsweise sogar kleiner 2 mm sein, um eine gute Benetzung sowohl der Schallaustrittsfläche 23 des Ultraschallsensors 9 als auch der Oberflächen der Hohlkammerplatte 5 zu erreichen. Ao und Au müssen nicht notwendigerweise gleich groß sein, da sich die Benetzungsverhältnisse zwischen der Plattenoberseite und der Plattenunterseite voneinander unterscheiden.

An jedem Ultraschallsensor 9 ist eine Düse 10 montiert, aus der Koppelflüssigkeit in den Spalt zwischen der Schallaustrittsfläche 23 des Ultraschallsensors 9 und der Hohlkammerplatte 5 eingespeist wird. Die Düse 10 sollte in ihrem Austrittsbereich den Ultaschallsensor 9 berühren, damit die Koppelflüssigkeit beim Verlassen der Düse 10 direkt Kontakt mit der Schallaustrittsfläche 23 bekommt. Dieser Effekt kann durch ein Abschrägen des Austrittsbereichs 23 der Düsen 10 wie in Fig. 2 dargestellt, noch verbessert werden. Die Koppelflüssigkeit füllt den Raum zwischen dem Schallaustrittsbereich 23 der Ultraschallsensoren 9 und den Hohlkammerplattenoberflächen 19 in Form eines Tropfens 11 aus. Der Tropfendurchmesser auf der Ober- To bzw. auf der Unterseite Tu sollte einen Durchmesser von kleiner 25 mm, vorzugsweise sogar einen solchen von kleiner 12 mm besitzen, um die Abkühlverhältnisse an den Oberflächen 19 der Hohlkammerplatte 5 nicht zu stark zu verändern. Der zur Aufrechterhaltung der Messung bzw. zur Aufrechterhaltung der Ankopplung erforderliche Koppelflüssigkeitsstrom liegt im Bereich kleiner 50 ml/min, vorzugsweise sogar kleiner 20 ml/min. Auch dies ist vorteilhaft, um das Koppelflüssigkeitsvolumen auf den Hohlkammerplattenoberflächen 19 zu minimieren, und damit eine nur geringfügige Störung der Abkühlverhältnisse der Oberflächen 19 sicherzustellen. Der Koppelflüssigkeitsstrom kann über Schwerkraft in Verbindung mit in der Skizze nicht dargestellten Feinstdrosseln oder aber mittels Miniaturpumpen 24 sichergestellt werden.

Die Koppelflüssigkeit 11 kann, um eine zu starke Abkühlung der Hohlkammerplattenoberflächen 19 zu vermeiden, zusätzlich auf die Temperatur, die die Hohlkammerplattenoberflächen 19 unterhalb der Ultraschallsensoren 9 besitzen, vorgeheizt werden. Auf den Hohlkammerplattenoberflächen 19 verbleibende Reste von Koppelflüssigkeit 11 können mit Hilfe von ebenfalls auf der Traverse 8 montierten Abstreifern 12 abgestriffen und eventuell zusätzlich mittels zusätzlicher Saugdüsen 13 abgesaugt werden.

Bei der Messung der Gesamtdicke D, bzw. der Wanddicken do und du werden nun von den Ultraschallsensoren 9 Schallwellen ausgesendet, die über die Koppelflüssigkeit 11 in die Oberflächen 19 der Hohlkammerplatte 5 eingespeist werden. An den jeweiligen Oberflächen 19 der Außenwände 6 bzw. 7 ergeben sich Schallechos, die über die Koppelflüssigkeit 11 wieder zu den Ultraschallsensoren 9 zurück gelangen. Über die Laufzeit des Schallimpulses lassen sich die exakten Abstände Ao und Au bestimmen. Die Gesamtdicke D der Hohlkammerplatte 5 ergibt sich nun aus der Gleichung D = As - Ao - Au. Zur Ermittlung der Dicken do beziehungsweise du wird der zeitliche Unterschied zwischen dem Schalleintrittsecho an den Oberflächen 19 und dem Rückwandecho an den Innenoberflathen 20 der Außenwände 6 bzw. 7 ausgewertet. In den Stegeinbindungsbereichen, wo sich auch die Einfallstellen 21 befinden, gibt es kein auswertbares Rückwandecho. Diese Bereiche können durch eine geeignete Software ausgeblendet werden.

Wirtschaftlich besonders interessant ist es nun, wenn man ein erfindungsgemäßes Verfahren anwendet, bei dem sowohl das Werkzeug 3 als auch der Kalibrator 4 mit automatisch ansteuerbaren Stellgliedern 15 und 16 beziehungsweise 17 und 18 ausgerüstet sind, mittels derer lokal die Werkzeugbeziehungsweise die Kalibratorgeometrie verstellt werden kann. Werden diese Stellglieder 15 bis 18 nun mit einem Rechner 14 verbunden, so kann der Rechner 14 einen Soll-Istwertvergleich für die Gesamtdicke D, sowie für die Wanddicken do und du durchführen und entsprechend einem implementierten Algorithmus Stellwege für einzelne Stellglieder 15 bis 18 berechnen, mit Hilfe derer man zu einer Verringerung der vorhandenen Wanddickenunterschiede über der Breite der Hohlkammerplatte 5 gelangt. Der Rechner 14 gibt folglich fortlaufend Befehle an die Stellglieder 15 bis 18 zur Anpassung lokaler Geometriegrößen im Werkzeug 3 oder in der Kalibrierung 4, um so zu einer Gesamtdicke D bzw. zu Wanddicken do bzw. du in der Hohlkammerplatte 5 zu kommen, die sehr eng toleriert sind.

## Patentansprüche

1. Verfahren zur online Messung der Gesamtdicke D von Hohlkammerplatten, bei dem sich in der Produktionsanlage jeweils oberhalb und unterhalb einer Hohlkammerplatte ein Ultraschallsensor (9) befindet, wobei die zur Messung eingesetzten Ultraschallsensoren (9) so nah an der jeweiligen Hohlkammerplattenoberfläche (19) befinden, daß zum Einkoppeln der Schallwellen in die jeweilige Außenwand (6, 7) jeweils ein Tropfen (11) einer Koppelflüssigkeit ausreicht, der den Zwischenraum zwischen dem Schallaustrittsbereich (23) der Ultraschallsensoren (9) und der Bahnoberfläche (19) der Hohlkammerplatte (5) benetzt und daß die Gesamtdicke D der Hohlkammerplatte (5) ermittelt wird, indem mittels der Reflexion der von den Ultraschallsensoren (9) ausgesendeten Schallwellen an der oberen bzw. unteren Hohlkammerplattenoberfläche (19) die Entfernung der beiden Ultraschallsensoren (9) zu der jeweiligen Hohlkammerplattenoberfläche (19) bestimmt und bei dem daraus in einer Auswerteeinheit (14), bei Kenntnis des Abstands der Ultraschallsensoren (9) untereinander, die Gesamtdicke D der Hohlkammerplatte (5) berechnet wird.

2. Verfahren zur Messung der Außenwanddicken do und die einer Hohlkammerplatte (5), wobei die zur Messung eingesetzten Ultraschallsensoren (9) so nah an der jeweiligen Hohlkammerplattenoberfläche (19) befinden, daß zum Einkoppeln der Schallwellen in die jeweilige Außenwand (6, 7) jeweils ein Tropfen (11) einer Koppelflüssigkeit ausreicht, der den Zwischenraum zwischen dem Schallaustrittsbereich (23) der Sensoren (9) und der Bahnoberfläche (19) der Hohlkammerplatte (5) benetzt, wobei die Außenwanddicken do und du der Hohlkammerplatte (5) mittels des Laufzeitunterschieds zwischen den Echos der ausgesendeten Schallwellen an der Ober- bzw. an der Unterseite der Außenwände (6 und 7) der Hohlkammerplatte (5) gemessen werden.

3. Verfahren nach Anspruch 1 oder 2, wobei die Ultraschallsensoren (9) direkt hinter dem Auslauf eines Kalibrators (4) angebracht sind.

4. Verfahren nach einem der Ansprüche 1 bis 3, wobei die Ultraschallsensoren (9) jeweils auf einer Traverse (8) montiert sind und über die gesamte Breite der Außenwände (6 und 7) traversieren.

5. Verfahren nach einem der Ansprüche 1 bis 4, wobei als Koppelflüssigkeit Wasser benutzt wird.

6. Verfahren nach einem der Ansprüche 1 bis 5, wobei die Koppelflüssigkeit erwärmt wird.

7. Verfahren nach einem der Ansprüche 1 bis 4, wobei die Koppelflüssigkeitsreste hinter dem Ultraschallsensor (9) durch Abstreifen oder Absaugen wieder von den Hohlkammerplattenoberflächen (19) entfernt werden.

8. Verfahren nach Anspruch 1 und 7, wobei die Hohlkammerplatten (19) aus thermoplastischem Kunststoff bestehen.

9. Verfahren zur Herstellung von Hohlkammerplatten (5) unter Verwendung des Meßverfahrens nach Anspruch 1 oder 2, wobei entweder die Außenwanddicken do und du oder die Gesamtdicke D oder alle drei Gröβen do, du und D der Hohlkammerplatte (5) gemeinsam hinter einem Werkzeug (3) zur Formung der Hohlkammerplatten (5) gemessen werden, und daß die gemessenen Daten einem Regler (14) zugeführt werden, der einen Soll- Istwertvergleich durchführt und daraus Stellgrößen zur Reduzierung der vorhandenen Abweichungen berechnet, und diese Stellgrößen an vorhandene Stelleiemente (15 bis 18) weiterleitet, die die Werkzeug- oder die Kalibratorgeometrie oder beides gemeinsam verändern.

## Claims

1. Process for the on-line measurement of the overall thickness D of hollow panels, where an ultrasonic sensor (9) is located in each case above and below a hollow panel in the production machine, where the ultrasonic sensors (9) used for measuring are positioned so close to the relevant sudace of the hollow panel (19), that a drop (11) of injection fluid is sufficient to inject the sound waves into the relevant outer wall (6, 7), said drop wetting the space between the probe index (23) of the ultrasonic sensors (9) and the surface (19) of the hollow panel (5) and that the overall thickness D of the hollow panel (5) is established by measuring the distance between the two ultrasonic sensors (9) and the surface of the hollow panel (19) in question, using the reflection on the top and bottom surface of the hollow panel (19) of the sound waves emitted by the ultrasonic sensors (9) and where the overall thickness D of the hollow panel (5) is calculated from this in an analysing unit (14), where the distance between the ultrasonic sensors (9) is known.

2. Process for measuring the outer wall thicknesses, do and du, of a hollow panel (5), where the ultrasonic sensors (9) used for measuring are positioned so close to the relevant surface of the hollow panel (19), that a drop (11) of injection fluid is sufficient to inject the sound waves into the relevant outer wall (6, 7), said drop wetting the space between the probe index (23) of the sensors (9) and the surface (19) of the hollow panel (5), where the outer wall thicknesses, do and du, of the hollow panel (5) are measured using the time between the echoes of the emitted sound waves at the top and bottom of the outer walls (6 and 7) of the hollow panel (5).

3. Process according to claim 1 or 2, where the ultrasonic sensors (9) are fitted directly behind the discharge of a calibrator (4).

4. Process according to any of the claims 1 to 3, where the ultrasonic sensors (9) are mounted in each case on a cross member (8) and traverse the entire width of the outer walls (6 and 7).

5. Process according to any of the claims 1 to 4, where water is used as the injection fluid.

6. Process according to any of the claims 1 to 5, where the injection fluid is heated.

7. Process according to any of the claims 1 to 4, where the injection fluid residues behind the ultrasonic sensor (9) are removed from the surfaces of the hollow panel (19) by wiping or suction.

8. Process according to claims 1 and 7, where the hollow panels (19) are made from thermoplastic material.

9. Process for the manufacture of hollow panels (5) using the measuring process according to claim 1 or 2, where either the outer wall thicknesses, do and du, or the overall thickness D or all three values, do, du and D, of the hollow panel (5) are measured jointly behind a tool (3) for forming the hollow panels (5), and that the measured data is then passed on to a controller (14), which carries out a setpoint/actual-value comparison and from this calculates manipulated vairiables to reduce the existing deviations, and passes these manipulated variables to existing final controlling elements (15 to 18), which alter the tool or calibrator geometry or both together.

## Revendications

1. Procédé de mesure en ligne de l'épaisseur totale D de plaques à chambres creuses, dans lequel il y a, dans l'installation de production, respectivement au-dessus et au-dessous d'une plaque à chambre creuses, un capteur d'ultrasons (9), dans lequel les capteurs d'ultrasons (9) utilisés pour la mesure se trouvent assez près de la surface respective (19) de la plaque à chambres creuses pour que, pour le couplage des ondes sonores dans la paroi externe respective (6, 7), il suffise respectivement d'une goutte (11) d'un liquide de couplage pour mouiller l'espace intermédiaire entre la zone de sortie sonore (23) des capteurs d'ultrasons (9) et la surface de glissement (19) de la plaque à chambres creuses (5) et pour que l'épaisseur totale D de la plaque à chambre creuses (5) soit détectée, en déterminant, par la réflexion des ondes sonores émises par les capteurs d'ultrasons (9) sur les surfaces supérieure et inférieure (19) de la plaque à chambres creuses, la distance des deux capteurs d'ultrasons (9) par rapport à la surface respective (19) de la plaque à chambres creuses et en déduisant par calcul dans une unité d'exploitation (14), en connaissant la distance mutuelle des capteurs d'ultrasons (9), l'épaisseur totale D de la plaque à chambres creuses (5).

2. Procédé de mesure des épaisseurs de parois externes do et du d'une plaque à chambres creuses (5), dans lequel les capteurs d'ultrasons (9) utilisés pour la mesure se trouvent. assez près de la surface respective (19) de la plaque à chambres creuses pour que, pour le couplage des ondes sonores dans la paroi externe respective (6, 7), il suffise respectivement d'une goutte (11) d'un liquide de couplage pour mouiller l'espace intermédiaire entre la zone de sortie sonore (23) des capteurs (9) et la surface de glissement (19) de la plaque à chambres creuses (5), les épaisseurs de parois do et du de la plaque à chambres creuses (5) étant mesurées au moyen de la différence de propagation entre les échos des ondes sonores émises sur la partie supérieure et la partie inférieure des parois extérieures (6, 7) de la plaque à chambres creuses (5).

3. Procédé selon la revendication 1 ou 2, dans lequel les capteurs d'ultrasons (9) sont montés directement derrière la sortie d'un calibreur (4).

4. Procédé selon l'une quelconque des revendications 1 à 3, dans lequel les capteurs d'ultrasons (9) sont montés respectivement sur un traverse (8) et se déplacent transversalement sur toute la largeur dés parois extérieures (6 et 7).

5. Procédé selon l'une quelconque des revendications 1 à 4, dans lequel on utilise comme liquide de couplage de l'eau.

6. Procédé selon l'une quelconque des revendications 1 à 5, dans lequel le liquide de couplage est chauffé.

7. Procédé selon l'une quelconque des revendications 1 à 4, dans lequel les restes de liquide de couplage derrière le capteur d'ultrasons (9) sont éliminés des surfaces (19) de la plaque à chambres creuses par raclage ou aspiration.

8. Procédé selon les revendications 1 et 7, dans lequel les plaques à chambres creuses (19) sont constituées d'un matériau thermoplastique.

9. Procédé de fabrication de plaques à chambres creuses (5) en utilisant le procédé de mesure selon la revendication 1 ou 2, dans lequel on mesure les épaisseurs do et du des parois latérales ou l'épaisseur totale D ou encore la totalité des trois grandeurs do, du et D de la plaque à chambres creuses (5) conjointement derrière un outil (3) de formation des plaques à chambres creuses (5), dans lequel les données mesurées sont acheminées à un régulateur (14) qui en tire par calcul des grandeurs de réglage pour réduire les écarts présents, et dans lequel ces grandeurs de réglage sont transmises à des éléments de réglage présents (15 à 18) qui modifient la géométrie de l'outil ou la géométrie du calibreur ou les deux conjointement.
